# EUROPÄISCHE PATENTSCHRIFT

(11) **EP 0 557 840 B1**
(45) Veröffentlichungstag und Bekanntmachung des Hinweises auf die Patenterteilung: **27.03.1996**
(21) Anmeldenummer: 93102318.8
(22) Anmeldetag: 15.02.1993
(51) Int. Cl.: C08L 27/12, C08L 33/08, C08J 3/24

(54) **Mischung aus peroxidisch vulkanisierbarem Fluorkautschuk und teilvernetztem Acrylatkautschuk**
Blends of peroxide vulcanizable fluororubber and partially crosslinked acryl rubber
Mélange de caoutchouc fluoré vulcanisable par péroxide et caoutchouc acrylique réticulé partiellement

(30) Priorität: 27.02.1992 DE 4206039
(43) Veröffentlichungstag der Anmeldung: 01.09.1993
(73) Patentinhaber: BAYER AG, D-51368 Leverkusen (DE)
(72) Erfinder: Krüger, Ralf, Dr., W-5000 Köln 80 (DE); Piejko, Karl-Erwin, Dr., W-5060 Bergisch Gladbach 2 (DE); Langstein, Gerhard, Dr., W-5070 Kürten-Biesfeld (DE); Morbitzer, Leo, Dr., W-5000 Köln 80 (DE); Eisele, Ulrich, Dr., W-5090 Leverkusen (DE)

(56) Entgegenhaltungen:
- DE-A- 3 841 699

## Beschreibung

Fluorkautschuke (FKM) auf der Basis von Vinylidenfluorid, Hexafluorpropen und gegebenenfalls Tetrafluorethylen liefern Vulkanisate mit befriedigenden mechanischen Eigenschaften und hoher Beständigkeit gegenüber Hitze, Öl, Ozon und Bestrahlung. Wegen dieser Eigenschaften sind mit Fluorkautschuken Anwendungsgebiete erschlossen worden, in die bisher kein anderer Kautschuktyp eindringen konnte. Ein wesentlicher Nachteil bei den FKM ist jedoch die außerordentlich schlechte Tieftemperaturflexibilität der Vulkanisate. In dieser Eigenschaft sind FKM handelsüblichen Acrylat-und Silikonkautschuken, die den Fluorkautschuken in der Hitzealterungs- und Ozonbeständigkeit am nächsten kommen, weit unterlegen. Als weiterer Nachteil gilt die geringe Füllbarkeit von FKM mit verstärkenden Füllstoffen. Hochaktive Füllstoffe haben schlechte Verarbeitungseigenschaften zur Folge, das heißt, sie verleihen dem Kautschuk eine hohe Mooneyviskosität. In FKM werden daher überwiegend nur inaktive oder wenig aktive Füllstoffe eingesetzt, vorzugsweise bis zu 30 Gewichtsteilen, selten bis zu 60 Gewichtsteilen, bezogen auf 100 Gewichtsteile FKM.

Einer gewünschten Kombination von Fluorkautschuken mit anderen preiswerteren Kautschuken, durch die im Compound einerseits eine Verbesserung der Tieftemperaturflexibilität bewirkt wird und andererseits die Verarbeitungseigenschaften und Füllbarkeit verbessert wird, steht häufig eine mangelnde Mischbarkeit und Covulkanisierbarkeit des Fluorkautschuk mit dem modifizierenden Blendpartner entgegen. Eine gute Mischbarkeit liegt dann vor, wenn der Blendpartner des Fluorkautschuks in diesem möglichst feinteilig und gleichmäßig verteilt ist. Ferner ist eine gleichmäßige Colvulkanisation notwendig, um hinsichtlich der mechanischen Eigenschaften des Covulkanisates synergistische Effekte zu erhalten, das heißt ein Eigenschaftsprofil zu erhalten, das hinsichtlich der einzelnen Eigenschaften möglichst nah an die jeweils gewünschte Eigenschaft des Einzelblendpartners heran reicht.

Hinsichtlich der potentiellen Blend-Eigenschaften scheinen Fluorkautschuke und Acrylatkautschuke hervorragende Blendpartner zu sein.

Es hat bereits Vorschläge gegeben, Acrylatkautschuk und Fluorkautschuk mit Bisamin zu vulkanisieren. Obwohl hierbei ein akzeptables mechanisches Eigenschaftsprofil erhalten wird, weisen diese bisaminisch vulkanisierten Kautschuke schlechtere Alterungseigenschaften, insbesondere in aggressiven Ölen auf (Rubber Chem. Technol. 63 (1990) 516-522).

Andere, für Acrylatkautschuke übliche Vernetzungssysteme sind nicht mit denen der FKM kompartibel. Man erhält während der Covulkanisation stets Gradienten in der Vernetzungsdichte und dem zufolge schlechte mechanische Eigenschaften (z.B. geringe Reißfestigkeiten).

Ein bei FKM zu einer besonders hochwertigen Vulkanisation führender Vulkanisationstyp ist die peroxidische Vernetzung. Um ein Gemisch mit einem nicht fluorhaltigen Kautschuk (z.B. Acrylatkautschuk) covulkanisieren zu können, muß der nicht fluorhaltige Kautschuk ebenfalls peroxidisch vernetzbar sein und eine dem FKM ähnliche Reaktivität gegenüber dem Vernetzungssystem besitzen. Eine peroxidische Vulkanisation des nicht fluorhaltigen Kautschuks über Abstraktion leicht abspaltbarer Atome oder Molekülgruppen (z.B. H-Abstraktion) erfordert meist schärfere Vulkanisationsbedingungen, als sie für den FKM nötig sind, und geht oft mit einem Kettenbruch- und -abbau einher. Spezielle mit Fluorkautschuken covulkanisierbare acrylathaltige Kautschuke sind Copolymerisate, die konjugierte, zur 1,4-Polymerisation befähigte Diene wie Butadien, Isopropen usw. enthalten, und werden z.B. in EP-A 163 971 und DE-A 2 940 686 erwähnt. Solche Kautschuke besitzen allerdings den Nachteil der geringen Alterungsstabilität wegen der im Polymerrückgrat verbleibenden Doppelbindungen, deren Anteil man nur teilweise durch vorherige Hydrierung reduzieren kann. Nachteilig bei der Mischung von löslichen, das heißt unvernetzten Kautschuken auf Acrylat-Basis mit FKM ist die Ausbildung von heterogenen Phasen mit schwer zu reproduzierenden Partikelgrößenverteilungen, die sich zudem bei der Vernetzung wieder verändern können.

In den EP-A 424 347 und 424 348 wird vorgeschlagen, in einer ersten Stufe ein unvernetztes Copolymerisat auf Basis Ethylacrylat dispers in dem FKM zu verteilen und in einer ersten Stufe mit einem für den Acrylatkautschuk spezifischen Vulkanisationssystem dynamisch zu vulkanisieren. In einer zweiten Stufe wird dann der FKM peroxidisch vulkanisiert. Dabei entsteht eine echte feste Dispersion vulkaniserter Acrylatkautschukteilchen als disperse Phase in dem vulkanisierten FKM-Kautschuk als kontinuierliche Phase. Eine Durchdringung der Blendpartner ist nicht möglich. Wegen der unterschiedlichen Vulkanisationssysteme findet ferner nur eine unzureichende Ankopplung der Matrix mit der dispersen Phase statt. Das Niveau der mechanischen Eigenschaften bleibt bei diesen zweistufig dynamisch vulkanisierten Mischungen beträchtlich hinter dem der vulkanisierten reinen FKM zurück.

Es wurde nun gefunden, daß eine erheblich bessere gegenseitige Durchdringung und Ankopplung von FKM und Acrylatkautschuken erzielt werden kann, wenn als Acrylatkautschuk ein teilvernetztes Acrylatcopolymeres, welches normalerweise 0,05 bis 5 Gew.-% copolymerisierter Einheiten einer mindestens 2, vorzugsweise mindestens 3, leicht polymerisierbare Doppelbindungen enthaltenden Verbindung enthalt, eingesetzt wird. Das Acrylatcopolymere wird in Form von teilweise vernetzten Teilchen mit Teilchendurchmessern von 60 bis 800 nm eingesetzt. Die Teilvernetzung wird durch die Bestimmung des Gelgehaltes nach M. Hoffmann et. al., Polymeranalytik I und II, Georg-Thieme-Verlag, Stuttgart 1977, charakterisiert. Die Gelgehalte des Acrylatcopolymeren (Acrylatkautschuk) liegen vorzugsweise im Bereich zwischen 20 und 99 Gew.-%. Der Quellungsindex gemesssen in Dimethylformamid liegt vorzugsweise oberhalb 10.

Gegenstand der vorliegenden Erfindung sind demgemäß radikalisch vulkanisierbare Kautschukmischungen, bestehend aus 35 bis 98 Gewichtsteile eines peroxidisch vulkanisierbaren Fluorkautschuks und 2 bis 65 Gewichtsteile eines Acrylatkautschuks sowie gegebenenfalls Vulkanisationshilfsmittel, Verarbeitungshilfsmittel und Füllstoffe, die dadurch gekennzeichnet sind, daß der Acrylatkautschuk ein teilvernetzter Acrylatkautschuk mit Gelgehalten zwischen 20 und 99 Gew.-% mit Teilchendurchmessern (d₅₀-Werte) von 60 bis 800 nm ist.

Vorzugsweise soll die Mischung 45 bis 95 Gewichtsteile Fluorkautschuk und 50 bis 55 Gewichtsteile Acrylatkautschuk enthalten.

Der Gelgehalt des Acrylatkautschuks soll vorzugsweise zwischen 40 und 98 Gew.-%, besonders bevorzugt zwischen 50 und 95 Gew.-% betragen.

Der Teilchendurchmesser des teilvernetzten Acrylatkautschuks liegt vorzugsweise zwischen 80 und 600 nm, besonders bevorzugt maximal 350 nm.

Als peroxidisch vernetzbare Fluorelastomere sind solche geeignet, die Einheiten von Vinylidenfluorid und mindestens einem weiteren damit copolymerisierbaren Fluorolefin enthalten. Das weitere Fluorolefin kann Tetrafluorethylen, Chlortrifluorethylen, Hexafluorpropen, Hexafluorisobutylen, Perfluoralkylvinylether, usw. sein. Daneben kann der Fluorkautschuk Einheiten nicht fluorhaltiger Monomerer wie Propen, Ethylen, Vinylalkylether und Vinylester enthalten. Solche Fluorkautschuke sind grundsätzlich bekannt und werden z.B. in DE-A 3 925 743 und DE-A 4 038 588 offenbart. Daneben muß der Fluorkautschuk Reaktivstellen für die peroxidische Vernetzung besitzen. Diese können sowohl Brom- oder Iod-oder Brom- und Iodsubstituenten, als auch seitenständige Doppelbindungen sein. Die Einführung solcher Reaktivstellen in den Fluorkautschuk geschieht im Falle der Brom- und Iodsubstituenten nach bekannten Verfahren, in denen entweder Brom- und/oder Iod-haltige Vinylverbindungen in kleinen Mengen mit dem Fluormonomeren copolymerisiert; siehe z.B. US-A 3 351 619, US-A 4 035 565, US-A 4 214 060, DE-A 3 715 210. Ferner kann in Gegenwart von gesättigten Iod-oder Brom und Iod-enthaltenden Verbindungen polymerisiert werden; siehe z.B. DE-A 2 815 187, DE-A 3 710 818. Gegebenenfalls können auch beide Möglichkeiten kombiniert werden; siehe z.B. EP-A 407 937 oder US-A 4 948 852. Einen Fluorkautschuk mit seitenständigen Doppelbindungen erhält man durch Copolymerisation von Fluormonomeren mit kleinen Mengen Alkenylisocyanuraten, Alkenylcyanuraten und/oder nicht konjugierten Dienen; siehe DE-A 4 038 588 sowie die nicht vorveröffentlichte DE-A 4 114 598.

In der erfindungsgemäßen Kautschukmischung weist der Fluorkautschuk vorzugsweise Fluorgehalte von 54 bis 69 Gew.-% auf.

In einer bevorzugten Ausführungsform der vorliegenden Erfindung enthält der Fluorkautschuk 0,2 bis 2,5 Mol-% copolymerisierte Einheiten von Di- und/oder Triallyl-(iso)cyanurat.

In einer weiteren Ausführungsform der vorliegenden Erfindung enthält der Fluorkautschuk vorzugsweise 0,2 bis 2,5 Mol-% copolymerisierte Einheiten nicht konjugierter Diene.

Geeignete Acrylatcopolymere sind wenigstens teilvernetzte kautschukartige Copolymerisate aus einem oder mehreren mindestens C₃-Alkylacrylaten, insbesondere C₃-C₈-Alkylacrylaten, vorzugsweise mindestens C₄-Alkylacrylaten und einer polyfunktionellen, copolymerisierbaren Polyvinyl- oder Allyl-Verbindung, vorzugsweise Triallylcyanurat, Vinylether von Polyolen, Bisacrylamine von Diaminen, wie Divinylbenzol, Glykol-Bis-Acrylat, Bisacrylamid, Phosphorsäure-triallylester, Zitronensäure-Triallylester, Zitronensäure-triallylester, Allylester von Acrylsäure oder Methacrylsäure, Maleinsäureallylester. Besonders bevorzugt sind Triallylcyanurat und Triallylisocyanurat.

Das Alkylacrylat kann bis zu 40 Gew.-% durch Acrylnitril, insbesondere C₁-C₃-Alkylmethacrylat oder deren Mischung substituiert sein. Bevorzugt sind Acrylnitril und/oder Alkylmethacrylat.

In einer besonders bevorzugten Ausführungsform der vorliegenden Erfindung ist der Acrylatkautschuk ein teilvernetztes kautschukartiges Polymerisat aus 60 bis 99,5 Gew.-% C₃-C₈-Alkylacrylat, 0 oder mehr Gew.-% Acrylnitril und/oder C₁-C₆-Alkylmethacrylat und 0,05 bis 5 Gew.-% einer polyfunktionellen copolymerisierbaren Polyvinyl- oder Allylverbindung.

Die copolymerisierbaren polyfunktionellen Polyvinyl-oder Allyl-Verbindungen werden normalerweise in Mengen von 0,05 bis 5 Gew.-% bezogen auf das Acrylatcopolymere eingesetzt.

Das Acrylatcopolymere kann in bekannter Weise durch radikalische wäßrige Emulsionspolymerisation in Gegenwart anionischer oberflächenaktiver Stoffe bei 40 bis 95°C, vorzugsweise bei 50 bis 80°C, hergestellt werden.

Zur Initiierung der radikalischen Copolymerisation werden in bekannter Weise insbesondere wasserlösliche anorganische Per-Verbindungen wie Persulfate, Perborate, Percarbonate usw., im allgemeinen in Form ihrer Natrium-, Kalium-oder Ammoniumsalze eingesetzt.

Das so entstehende Acrylatcopolymere in Form von zumindest teilweise vernetzten Teilchen in wäßriger Dispersion kann in dieser Form zur Mischungsbildung mit dem Blendpartner FKM eingesetzt werden. Es ist jedoch auch möglich, die teilweise vernetzten Teilchen zunächst zu koagolieren, von der wäßrigen Lösung zu trennen, zu trocknen und die Blendpartner in trockener kompakter Form z.B. auf dem Walzenstuhl zu vermischen. Die Koagulation erfolgt durch Ansäuerung mit verdünnter Schwefelsäure auf einen pH- Wert von etwa 2 und anschließender Fällung mit einer 4%igen wäßrigen Magnesiumsulfatlösung.

Das bevorzugte Verfahren zur Herstellung der erfindungsgemäßen Kautschukmischung besteht darin, daß der Fluorkautschuk und der Acrylatcopolymerkautschuk jeweils in Form von wäßrigen Dispersionen miteinander vermischt werden und aus der Mischemulsion gemeinsam koaguliert gefällt und aufgearbeitet werden.

Das Koagulieren erfolgt durch Ansäuern der Mischemulsion mit verdünnter Schwefelsäure auf einen pH-Wert von etwa 2, Fällung mit einer 4%igen wäßrigen Magnesiumsulfatlösung, die in einer Menge von etwa 3.500 ml auf 500 g Festkautschuk eingesetzt wird, Abtrennung von dem Emulsionsserum, Waschen mit Wasser und Trocknen.

Zur Herstellung der Elastomere, das heißt zur Herstellung der gummielastischen Vulkanisate, aus den Kautschukmischungen werden diese in üblicher Weise mit Radikalstartern, sowie weiteren Hilfs- und Zusatzstoffen wie Covernetzern, Säureakzeptoren, Füllstoffen, Verstärkungsmitteln, Weichmachern, Schmierstoffen, Verarbeitungshilfsstoffen, Pigmenten usw. in üblichen Mischaggregaten, z.B. Zweiwalzen-Gummimischwalzwerken, vermischt und nach der Formgebung durch energiereiche Strahlung oder thermisch vernetzt.

Als Radikalstarter dienen vorzugsweise Peroxide, die bei Temperaturen oberhalb von 100°C Halbwertzeiten der Zersetzung von mindestens 5 Minuten aufweisen, wie beispielsweise Dibenzoylperoxid, t-Butylperoxybenzol, Bis-(t-butylperoxy-isopropyl)-benzol, 2,5-Bis-(t-butylperoxy)-2,5-dimethylhexan oder 2,5-Bis-(t-butylperoxy)-2,5-dimethylhexin-(3). Der Radikalstarter wird in Mengen von 0,5 bis 10 Gewichtsteile, bevorzugt 1 bis 5 Gewichtsteile, bezogen auf 100 Teile Polymermischung eingesetzt.

Zur Erzielung besserer Vulkanisationseigenschaften insbesondere bei der Druckhärtung und zur Verbesserung der mechanischen Eigenschaften können zusätzliche Covernetzer eingearbeitet werden. Als Covernetzer geeignet sind insbesondere Verbindungen mit mehreren Doppelbindungen, wie z.B. Triallylcyanurat, Triallylisocyanurat, Tri(meth)allylisocyanurat, Tetramethyl- oder Tetravinylcyclotetrasiloxan, Triallylphosphit und N,N'-m-Phenylen-bis-maleinimid. Covernetzer können in Mengen von 0,1 bis 15 Gewichtsteilen, bevorzugt 0,5 bis 10 Gewichtsteilen jeweils bezogen auf 100 Teile Polymermischung eingearbeitet werden. Ein weiterer möglicher Bestandteil der vulkanisierbaren Mischung sind als Säureakzeptoren dienende Oxide oder Hydroxide von Metallen wie Magnesium, Kalzium, Blei, Zink, Barium usw. oder ein basisches Salz mit einem organischen Säurerest, Stearat, Magnesiumoxalat oder Carbonate oder basisches Bleiphosphat, usw.. Verschiedene Säureakzeptoren können in Kombination eingesetzt werden. Der Gesamtgehalt von Säureakzeptoren soll 15 Gewichtsteile bezogen auf 100 Teile Polymer nicht übersteigen.

Durch die hohe Füllbarkeit der erfindungsgemäßen Kautschukmischungen gegenüber reiner FKM kann durch die Zugabe von Füllstoffen, Verstärkungsmitteln, Pigmenten, Weichmachern, Schmierstoffen und weiteren Verarbeitungshilfsstoffen ein breites Eigenschaftsspektrum der Vulkanisate abgedeckt werden.

Die thermische Vulkanisation erfolgt in bekannter Weise bei 120 bis 180°C, zunächst in der Form unter Druck und danach durch Nachvulkanisation drucklos im Umluftofen.

Die Erfindung wird anhand der nachfolgenden Beispiele näher erläutert:

### Beispiel 1

### a) Herstellung des Fluorkautschuk

In einen kontinuierlich betriebenen Rührkesselreaktor mit einem Volumen von 6 l, der bei einer Temperatur von 55°C und einem Druck von 63 bar gehalten wurde, wurden pro Stunde kontinuierlich 110 g Vinylidenfluorid, 110 g Hexafluorpropen, 230 g einer wäßrigen Lösung von 5 g Kaliumpersulfat (pH 11), 230 g einer wäßrigen Lösung von 2,3 g Lithiumperfluoroctylsulfonat und 3 g Triethanolamin (pH 10,5), und 8 ml einer Lösung von 2,5 g Triallylisocyanurat in Essigsäuremethylester zugepumpt. Nach Erreichen des stationären Gleichgewichtszustandes wird eine Emulsion mit einem Feststoffgehalt von zwischen 23 und 24 Gew.-% kontinuierlich über ein Druckentspannungsventil ausgetragen. Die erhaltene Emulsion wurde in dieser Form zur Herstellung der Kautschukmischung (nachfolgend unter c)) eingesetzt.

Zur Charakterisierung des so erhaltenen Fluorkautschuks wurde eine kleine Menge der erhaltenen Emulsion mit verdünnter Schwefelsäure auf einen pH-Wert von ca. 2 angesäuert und mit einer 4%igen wäßrigen Magnesiumsulfatlösung gefällt. Der Feststoff wurde von der Emulsionsflüssigkeit abgetrennt, mit Wasser gewaschen und dann getrocknet. Man erhält ein kautschukartiges Copolymeres aus Vinylidenfluorid, Hexafluorpropen und Triallylisocyanurat. Das molare Verhältnis von Vinylidenfluorid zu Hexafluorpropen im Copolymeren wurde durch ¹⁹F-Kernresonanzspektroskopie und der Gehalt an polymergebundene Triallylisocyanurat durch Stickstoffelementaranalyse bestimmt. Es ergibt sich eine molare Copolymerzusammensetzung von 78,9 % Vinylidenfluorid, 20,7 % Hexafluorpropen und 0,4 % Triallylisocyanurat. Das Vorhandensein freier Doppelbindungen läßt sich durch Addition von Iodbromid nachweisen. Die Iodzahl nach HANUS beträgt 1,5 g Iod/100 g Polymer. Der Mooneywert ML₁₀ (100°C) des Rohpolymeren beträgt 96. Die durch DSC bestimmte Glastemperatur liegt bei minus 14° C.

### b) Herstellung des Acrylatkautschuks

In einem Reaktor wird unter Rühren und unter Stickstoffatmosphäre eine Lösung aus 0,7 Gew.-Tln. Na-Salz von C₁₄-C₁₈-Alkylsulfonsäuren (®Mersolat K 30) und 1 545 Gew.-Tln. Wasser vorgelegt. Nach Aufheizen auf 70°C werden 120 Gew.-Tle. einer Lösung von 0,47 Gew.-% Triallylcyanurat in Butylacrylat hinzugegeben. Danach wird eine Lösung von 4,5 Gew.-Tln. Kaliumperoxidisulfat in 100 Gew.-Tln. Wasser zur Initiierung der Polymerisation zugegeben. Nach dem Anspringen der Polymerisation werden bei auf 70°C konstant, gehaltener Temperatur innerhalb von 5 Stunden gleichmäßig weitere 1 380 Gew.-Tle. einer Lösung von 4,7 Gew.-% Triallylcyanurat in Butylacrylat und einer Lösung von 30 Gew.-Tln. Na-Salz von C₁₄-C₁₈-Alkylsulfonsäuren in 1 000 Gew.-Tln. Wasser zudosiert. Anschließend wird 4 Stunden bei 70°C gehalten. Es wird ein Latex mit einem Polymerfeststoffgehalt von 35 Gew.-% erhalten, der in dieser Form zur Herstellung der Kautschukmischung (siehe nachfolgend unter c) eingesetzt wird.

Der Teilchendurchmesser (d₅₀) des Acrylatcopolymeren wird zu 170 nm bestimmt. Der Gelgehalt (Dimethylformamid als Lösungsmittel) bei 23°C des Acrylatcopolymeren wird zu 97 Gew.-% bestimmt.

### c) Herstellung der Kautschukmischung

Die unter a) erhaltene Fluorkautschukemulsion und unter b) erhaltene Acrylatcopolymersuspension werden im Verhältnis 80 Gew.-Tle. Fluorkautschuk : 20 Gew.-Tle. Acrylatcopolymeres (jeweils bezogen auf Polymerfeststoffgehalt) vermischt. Anschließend wird mit verdünnter Schwefelsäure auf einen pH-Wert von etwa 2 angesäuert und mit einer 4%igen wäßrigen Magnesiumsulfatlösung (3.500 ml auf 500 g Festkautschuk) gefällt. Der Feststoff wird von dem Emulsionsserum abgetrennt, mit Wasser gewaschen und getrocknet.

### d) Herstellung der Vulkanisationsmischung und der Vulkanisate

Auf einem Zweiwalzen-Gummimischwalzwerk wurden 100 Gew.,-Tle. der unter c) erhaltenen Kautschukmischung, 3 Gew.-Tle. Kalziumhydroxid, 30 Gew.-Tle. Russ MT Black N 990, 2 Gew.-Tle. 50%iges Triallylisocyanurat in inaktiven Füllstoffen (®Percalink 301-50) und 3 Gew.-Tle. 2,5-Dimethyl-2,5-bis(tertiärbutyl)-hexan, 45%ig in inaktiven Füllstoffen (®Luperco 101 XL) vermischt.

Die Mischung wurde anschließend 10 Minuten bei 170°C und 200 bar druckvulkanisiert und 24 Stunden bei 180°C im Umluftofen nachvulkanisiert.

Die Zugfestigkeit des Vulkanisats wurde zu 12,5 MPa bestimmt. Die Zugdehnung beträgt 340 %. Die aus temperaturabhängigen Schubmodulmessungen (Torsionsautomat "Brabender") bestimmte Glastemperatur beträgt minus 20°C.

### Beispiel 2

Es wurde wie in Beispiel 1 verfahren, mit der Abweichung, daß die Kautschukmischung aus 60 Gew.-Tln. Fluorkautschuk und 40 Gew.-Tln. Acrylatcopolymeres (gerechnet jeweils als Polymerfeststoffgehalt) hergestellt wurde.

Das erhaltene Vulkanisat weist eine Zugfestigkeit von 11,5 MPa und eine Zugdehnung von 190 % auf. Die Glastemperatur wurde zu minus 25°C bestimmt.

### Beispiel 3

Es wurde wie in Beispiel 1 verfahren, mit der Abweichung, daß die Kautschukmischung aus 70 Gew.-Teilen Fluorkautschuk (aus Beispiel 1) und 30 Gew.-Teilen eines Acrylatcopolymeren bestand, wobei das Acrylatcopolymere aus 10 Gew.-% 2-Ethylhexylacrylat, 89,5 Gew.-% Butylacrylat und 0,5 Gew.-% Triallylcyanurat copolymerisiert war und einen Gelgehalt von 97 % und eine Teilchengröße von 185 nm aufweist.

Das erhaltene Vulkanisat weist eine Zugfestigkeit von 10 MPa und eine Zugdehnung von 200 % auf. Die Glastempertur wurde zu minus 21°C bestimmt.

### Beispiel 4

Es wurde wie in Beispiel 1 verfahren, mit der Abweichung, daß die Kautschukmischung aus 70 Gew.-Teilen Fluorkautschuk (aus Beispiel 1) und 30 Gew.-Teilen eines Acrylatcopolymeren bestand, wobei das Acrylatcopolymere aus 20 Gew.-% 2-Ethylhexylacrylat, 79,5 Gew.-% Butylacrylat und 0,5 Gew.-% Triallylcyanurat copolymerisiert war und einen Gelgehalt von 98 % und eine Teilchengröße von 180 nm aufweist.

Das erhaltene Vulkanisat weist eine Zugfestigkeit von 9,7 MPa und eine Zugdehnung von 190 % auf. Die Glastempertur wurde zu minus 26°C bestimmt, wobei der Glasübergang etwas temperaturverbreitert war.

### Beispiel 5

Es wurde wie in Beispiel 1 gearbeitet, mit der Abweichung, daß zur Herstellung des Acrylatcopolymeren anstelle von Butylacrylat eine Mischung von 50 % Butylacrylat und 50 % 2-Ethylhexylacrylat eingesetzt wurde.

Das Acrylatcopolymere wies einen Gelgehalt von 98 Gew.-% und einen Teilchendurchmesser von 180 nm auf.

Das erhaltene Vulkanisat der Mischung hatte eine Zugfestigkeit von 10 MPa und eine Zugdehnung von 280 %. Zwei temperaturverbreiterte überlappende Glasübergänge wurden bis minus 38°C und minus 13°C gefunden. Hieraus wurde geschlossen, daß ein mehrphasiges Vulkanisat vorlag.

### Beispiel 6

Es wurde entsprechend Beispiel 1 gearbeitet, mit der Abweichung, daß ein Acrylatpolymeres gemäß Beispiel 3 eingesetzt wurde und ein Mengenverhältnis von Fluorkautschuk zu Acrylatcopolymerem gemäß Beispiel 2 eingesetzt wurde.

Die Zugfestigkeit des Vulkanisats wurde zu 7 MPa, die Zugdehnung zu 160 % bestimmt. Die Glastemperatur erstreckte sich von minus 38 bis minus 14°C.

### Beispiel 7

Es wird wie in Beispiel 1 gearbeitet, mit der Abweichung, daß zur Herstellung des Acrylatcopolymeren anstelle von Butylacrylat eine Mischung aus 78 Gew.-% Ethylhexylacrylat und 22 Gew.-% Acrylnitril eingesetzt wird. Fluorkautschuk und Acrylatcopolymeres wurden in einem Mengenverhältnis von 60 Gew.-Tln. Fluorkautschuk zu 40 Gew.-Tln. Acrylatcopolymeres (jeweils bezogen auf Polymerfeststoffgehalt) eingesetzt.

Das Vulkanisat hatte eine Zugfestigkeit von 10 MPa und eine Zugdehnung von 200 %. Die Glastemperatur wurde zu minus 9°C bestimmt.

### Beispiel 8

### a) Fluorkautschuk

Es wurde ein kommerziell erhältlicher Fluorkautschuk (®Viton GF) eingesetzt. Dabei handelt es sich um ein Copolymer aus ca. 69 Mol-% Vinylidenfluorid, ca. 14 Mol-% Hexafluorpropen, ca. 17 Mol-% Tetrafluorethylen und einem Brom-cure-site (ca. 0,6 Gew.-% Brom im Polymer). Das Rohpolymer besitzt im unvernetzten Zustand eine Glastemperatur (DSC, Temperatur bei halber Sprunghöhe) von minus 4°C und einen Mooneywert ML₁₀ (100°C) von 103.

### b) Acrylatcopolymeres

Es wird ein Acrylatcopolymeres durch koagulieren, fällen und abtrennen aus einer Emulsion gemäß Beispiel 1b), Waschen und Trocknen gewonnen.

### c) Herstellen der Mischung

Es werden zunächst 90 Gew.-Tle. des Fluorkautschuks auf die Walze eines Zweiwalzen-Gummimischwerks gegeben und anschließend 10 Gew.-Tle. Acrylatcopolymeres eingearbeitet.

### d) Herstellung der Vulkanisationsmischung und des Vulkanisates

Es wird wie in Beispiel 1 gearbeitet.

Das Vulkanisat weist eine Zugfestigkeit von 15 MPa und eine Zugdehnung von 300 % auf. Die Glastemperatur wurde zwischen minus 20 bis minus 1°C bestimmt.

### Beispiel 9

Es wurde wie in Beispiel 6 gearbeitet, mit der Abweichung, daß die Mischung aus 60 Gew.-Tln. Fluorkautschuk und 40 Gew.-Tln. Acrylatcopolymeres hergestellt wurde.

Die Zugfestigkeit des Vulkanisats wurde zu 8 MPa und die Zugdehnung zu 110 % bestimmt. Die Glastemperatur wurde zwischen minus 20 und minus 2°C ermittelt.

### Beispiel 10 (Vergleichsbeispiel)

Es wurde wie in Beispiel 8 gearbeitet, mit der Abweichung, daß bei der Herstellung des Acrylatcopolymeren anstelle einer Mischung von Butylacrylat mit 0,47 Gew.-% Triallylisocyanurat nur Butylacrylat eingesetzt wurde. Das gefällte Acrylatpolymerisat war vollständig in Dimethylformamid löslich. Der Gelgehalt betrug demgemäß 0 Gew.-%. Wegen der extremen Klebrigkeit des hier eingesetzten unvernetzten Butylacrylatkautschuks ließ sich beim Vermischen mit dem Fluorkautschuk auf der Walze kein Walzfell bilden. Die Herstellung der Kautschukmischung und der Vulkanisationsmischung erfolgte daher in einem Innenkneter.

Das Vulkanisat wies eine Zugfestigkeit von 8 MPa und eine Zugdehnung von 170 % auf.

### Beispiel 11 (Vergleichsbeispiel)

Es wurde entsprechend Beispiel 10 gearbeitet, mit der Abweichung, daß das Mengenverhältnis von Fluorkautschuk und Butylacrylatkautschuk 80 Gew.-Tle. zu 20 Gew.-Tle. betrug. Eine Verarbeitung auf dem Zweiwalzen-Gummimischwalzwerk war ebenfalls nicht möglich.

Die Zugfestigkeit des Vulkanisats betrug 6 MPa, die Zugdehnung 110 %.

### Beispiel 12 (Vergleichsbeispiel)

Es wurde entsprechend Beispiel 11 gearbeitet, mit der Abweichung, daß ein unter der Bezeichnung ®Viton A kommerziell erhältlicher Fluorkautschuk eingesetzt wird, bei dem es sich um ein Copolymer aus ca. 78 Mol-% Vinylidenfluorid und 22 Mol-% Hexafluorpropen handelt. Die Glastemperatur in unvernetztem Zustand beträgt minus 16°C, der Mooneywert ML₁₀ (100°C) 72. Der Fluorkautschuk ist nicht peroxidisch vernetzbar.

Entsprechend wurde weiterhin abweichend von Beispiel 9 die Vulkanisationsmischung wie folgt aufgebaut:

Zu der Kautschukmischung aus 80 Gew.-Tln. Fluorkautschuk und 20 Gew.-Tln. Butylacrylatkautschuk wurden 6 Gew.-Tle. Kalziumhydroxid, 3 Gew.-Tle. Magnesiumoxid, 30 Gew.-Tle. Ruß MT Black N 990, 2 Gew.-Tle. Bisphenol AF (2,2-Bis-4-hydroxyphenyl)hexafluorpropan) und 0,66 Gew.-Tle. Benzyl-triphenyl-phosphoniumchlorid gegeben und in einem Innenkneter vermischt.

Das erhaltene Vulkanisat zeigt eine Zugfestigkeit von 2,5 MPa und einer Reißdehnung von 225 %.

Die gemäß Beispielen 10, 11 und 12 erhaltenen Proben schrumpften während der Nachvulkanisation und verloren ihre ursprüngliche Form (100x100x1mm³-Platten), die sie durch die Formgebung durch Preßvulkanisation erhalten hatten.

## Patentansprüche

1. Radikalisch vulkanisierbare Kautschukmischung, bestehend aus 35 bis 98 Gew.-Tle. eines peroxidisch vulkanisierbaren Fluorkautschuks und 2 bis 65 Gew.-Tle. eines Acrylatkautschuks sowie gegebenenfalls Vulkanisations-, Verarbeitungs- und Modifizierungshilfsmittel und Füllstoffe, dadurch gekennzeichnet, daß der Acrylatkautschuk ein teilvernetzter Acrylatkautschuk mit Gelgehalten zwischen 20 und 99 Gew.-% und Teilchendurchmessern (d₅₀-Werten) von 60 bis 800 nm ist.

2. Kautschukmischung nach Anspruch 1, dadurch gekennzeichnet, daß der Fluorkautschuk Fluorgehalte von 54 bis 69 Gew.-% aufweist.

3. Kautschukmischung nach einem der Ansprüche 1 oder 2, dadurch gekennzeichnet, daß der Fluorkautschuk 0,2 bis 2,5 Mol-% copolymerisierte Einheiten von Di- und/oder Triallyl(iso)cyanurat enthält.

4. Kautschukmischung nach einem der Ansprüche 1 oder 2, dadurch gekennzeichnet, daß der Fluorkautschuk 0,2 bis 2,5 Mol-% copolymerisierte Einheiten nicht konjugierter Diene enthält.

5. Kautschukmischung nach einem der Ansprüche 1 bis 4, dadurch gekennzeichnet, daß der Acrylatkautschuk 0,05 - 5 Gew.-% polyfunktionelle, copolymerisierbare Polyvinyl- oder Allylverbindungen, bezogen auf das Acrylatpolymer, enthält.

6. Kautschukmischung nach Anspruch 5, dadurch gekennzeichnet, daß die polyfunktionellen, copolymerisierbaren Polyvinyl- oder Allylverbindungen Triallylcyanurat oder Triallylisocyanurat sind.

7. Kautschukmischungen nach einem der Ansprüche 1 bis 6, dadurch gekennzeichnet, daß der Acrylatkautschuk ein teilvernetztes kautschukartiges Polymerisat aus 60 bis 99,5 Gew.-% C₃-C₈-Alkylacrylat, 0 oder mehr Gew.-% Acrylnitril und/oder C₁-C₆-Alkylmethacrylat und 0,05 bis 5 Gew.-% einer polyfunktionellen copolymerisierbaren Polyvinyl- oder Allylverbindung ist.

8. Verfahren zur Herstellung der Kautschukmischung nach einem der Ansprüche 1 bis 7, dadurch gekennzeichnet, daß wäßrige Dispersionen des Fluorkautschuks und des Acrylatkautschuks gegebenenfalls unter Zugabe weiterer Bestandteile der Kautschukmischung miteinander vermischt, koaguliert, gefällt und von Wasser befreit werden.

9. Verfahren zur Herstellung von Elastomeren auf Basis Fluorkautschuk und Acrylatkautschuk, dadurch gekennzeichnet, daß eine Mischung aus einem peroxidisch vulkanisierbaren Fluorkautschuk und einem teilvernetzten Acrylatkautschuk mit Gelgehalten zwischen 20 und 99 Gew.-% und Teilchendurchmessern von 60 bis 800 nm und gegebenenfalls weiteren Vulkanisations-, Verarbeitungs- und Modifizierungshilfsmitteln und Füllstoffen nach Formgebung radikalisch vulkanisiert wird.

## Claims

1. Rubber mixture capable of vulcanisation in radicalic manner, consisting of 35 to 98 parts by weight of a fluorine-containing rubber capable of peroxidic vulcanisation and 2 to 65 parts by weight of an acrylate rubber as well as optionally vulcanising, processing and modifying aids and fillers, characterised in that the acrylate rubber is a partly cross-linked acrylate rubber with gel contents between 20 and 99 wt.-% and particle diameters (d₅₀-values) from 60 to 800 nm.

2. Rubber mixture according to claim 1, characterised in that the fluorine-containing rubber has fluorine concentrations from 54 to 69 wt.-%.

3. Rubber mixture according to one of claims 1 or 2, characterised in that the fluorine-containing rubber contains 0.2 to 2.5 mol-% copolymerised units of di-and/or triallyl(iso)cyanurate.

4. Rubber mixture according to one of claims 1 or 2, characterised in that the fluorine-containing rubber contains 0.2 to 2.5 mol-% copolymerised units of nonconjugated dienes.

5. Rubber mixture according to one of claims 1 to 4, characterised in that the acrylate rubber contains 0.05 to 5 wt.% of polyfunctional copolymerisable polyvinyl or allyl compounds, relative to the acrylate polymer.

6. Rubber mixture according to claim 5, characterised in that the polyfunctional copolymerisable polyvinyl or allyl compounds are triallyl cyanurate or triallyl isocyanurate.

7. Rubber mixtures according to one of claims 1 to 6, characterised in that the acrylate rubber is a partly cross-linked rubber-type polymer of 60 to 99.5 wt.-% C₃-C₈-alkylacrylate, 0 or more wt.-% acrylonitrile and/or C₁-C₆-alkylmethacrylate and 0.05 to 5 wt.-% of a poly-functional polyvinyl- or allyl compound capable of copolymerisation.

8. Process for the production of the rubber mixture according to one of claims 1 to 7, characterised in that the aqueous dispersions of the fluorine-containing rubber are mixed with one another, coagulated, precipitated and freed from water, optionally subject to the addition of other components of the rubber mixture.

9. Process for the production of elastomers based on fluorine-containing rubber and acrylate rubber, characterised in that a mixture consisting of a fluorine-containing rubber capable of peroxidic vulcanisation and a partly cross-linked acrylate rubber with gel contents between 20 and 99 wt.-% and particle diameters from 60 to 800 nm and optionally other vulcanising, processing and modifying aids and fillers is subjected to radicalic vulcanisation after moulding.

## Revendications

1. Mélange de caoutchoucs apte à la vulcanisation radicalaire, consistant en 35 à 98 parties en poids d'un caoutchouc fluoré vulcanisable à l'aide de peroxydes et 2 à 65 parties en poids d'un caoutchouc d'acrylate, avec le cas échéant des produits auxiliaires de vulcanisation, de façonnage et de modification et des matières de charge, caractérisé en ce que le caoutchouc d'acrylate est partiellement réticulé, a une teneur en gel de 20 à 99 % en poids et a un diamètre de particule (valeur d₅₀) de 60 à 800 nm.

2. Mélange de caoutchoucs selon la revendication 1, caractérisé en ce que le caoutchouc fluoré est à une teneur en fluor de 54 à 69 % en poids.

3. Mélange de caoutchoucs selon l'une des revendications 1 ou 2, caractérisé en ce que le caoutchouc fluoré contient 0,2 à 2,5 mol % de motifs copolymérisés d'(iso)cyanurate de di- et/ou de tri-allyle.

4. Mélange de caoutchoucs selon l'une des revendications 1 ou 2, caractérisé en ce que le caoutchouc fluoré contient 0,2 à 2,5 mol % de motifs copolymérisés de diènes non conjugués.

5. Mélange de caoutchoucs selon l'une des revendications 1 à 4, caractérisé en ce que le caoutchouc d'acrylate contient de 0,05 à 5 % en poids de composés polyvinyliques ou allyliques polyfonctionnels copolymérisables par rapport au polymère d'acrylate.

6. Mélange de caoutchoucs selon la revendication 5, caractérisé en ce que les composés polyvinyliques ou allyliques polyfonctionnels copolymérisables consistent en cyanurate de triallyle ou isocyanurate de triallyle.

7. Mélanges de caoutchoucs selon l'une des revendications 1 à 6, caractérisés en ce que le caoutchouc d'acrylate est un polymère analogue à un caoutchouc, partiellement réticulé, de 60 à 99,5 % en poids d'un acrylate d'alkyle en C₃-C₈, éventuellement de l'acrylonitrile et/ou un méthacrylate d'alkyle en C₁-C₆, et 0,05 à 5 % en poids d'un composé polyvinylique ou allylique polyfonctionnel copolymérisable.

8. Procédé de préparation du mélange de caoutchoucs selon l'une des revendications 1 à 7, caractérisé en ce que l'on mélange des dispersions aqueuses du caoutchouc fluoré et du caoutchouc d'acrylate, on ajoute éventuellement d'autres constituants du mélange de caoutchoucs, on coagule, on précipite et on sèche.

9. Procédé de préparation d'élastomères à base de caoutchouc fluoré et de caoutchouc d'acrylate, caractérisé en ce que l'on soumet à vulcanisation radicalaire après façonnage un mélange d'un caoutchouc fluoré vulcanisable par des peroxydes et d'un caoutchouc d'acrylate partiellement réticulé à une teneur en gel de 20 à 99 % en poids et un diamètre de particule de 60 à 800 nm et le cas échéant d'autres produits auxiliaires de vulcanisation, de façonnage et de modification et matières de charge.
